Europäisches Patentamt

European Patent Office

Office européen des brevets

(11) Veröffentlichungsnummer: **0 279 874**
**B1**

(12) **EUROPÄISCHE PATENTSCHRIFT**

(45) Veröffentlichungstag der Patentschrift:
16.05.90

(21) Anmeldenummer: 87102480.8

(22) Anmeldetag: 21.02.87

(51) Int. Cl.⁵: **H04N 1/06, B23B 31/18**

(54) **Einspannvorrichtung für Bildzylinder.**

(43) Veröffentlichungstag der Anmeldung:
31.08.88 Patentblatt 88/35

(45) Bekanntmachung des Hinweises auf die Patenterteilung:
16.05.90 Patentblatt 90/20

(84) Benannte Vertragsstaaten:
DE FR GB IT

(56) Entgegenhaltungen:
DE-A- 2 732 597
DE-B- 1 006 009
US-A- 2 361 763
US-A- 2 657 259

MACHINES AND TOOLING, Band 34, Nr. 9, 1963,
Seiten 28-31, Melton, Mowbray, GB; N.P. KOSOV:
"Mechanized machine tool fixtures"

(73) Patentinhaber: **Dr.-Ing. Rudolf Hell GmbH,
Grenzstrasse 1-5, D-2300 Kiel 14(DE)**

(72) Erfinder: **Deisler, Manfred, Bergkoppel 49,
D-2302 Flintbeck(DE)**
Erfinder: **Balzeit, Ralf, Feldstrasse 2, D-2308 Preetz(DE)**
Erfinder: **Gesell, Reinhard, Weidenkamp 17,
D-2314 Schönkirchen(DE)**
Erfinder: **Lassen, Bernd, Steenkamp 7,
D-2305 Kitzeberg(DE)**
Erfinder: **Dinse, Wolfgang, Grenzstrasse 12,
D-2300 Kiel 14(DE)**

# Beschreibung

Die Erfindung betrifft Einrichtungen zum Einspannen von Bildzylindern in Trommelscanner.

Bei Trommelscannern werden die abzutastenden Bilder durchweg als Diapositive auf der Außenfläche eines glasklar durchsichtigen Zylinders, des sogenannten Bildzylinders, befestigt. Eine im Inneren des Zylinders axial mitgeführte Lichtquelle durchstrahlt das Bild, wenn dieses durch das Zusammenspiel von Drehbewegung des Zylinders und axialer Vorschubbewegung des außengeführten Abtastorgans in Form einer Helix mit geringer Steigung linienweise abgetastet wird.

Die Mitführung der im Zylinder befindlichen Lichtquelle wäre recht kompliziert, wenn man den Bildzylinder beidseitig lagerte. Außerdem ist es im Sinne kurzer Rüstzeiten (Stillstandszeiten) wünschenswert, Bildzylinder im Wechsel außerhalb des Scanners vorzubereiten, d. h. die Diapositive ortsgenau aufzukleben und gegebenenfalls auch bereits Einstellwerte für den Scanner vorab zu ermitteln und den so vorbereiteten Zylinder dann durch eine entsprechend gestaltete Einspannvorrichtung genau rundlaufend einzuspannen.

Die vorliegende Erfindung hat es sich zur Aufgabe gemacht, Einspannvorrichtungen für Bildzylinder anzugeben, die die Zylinder fliegend aufnimmt und unabhängig von der Geschicklichkeit des Bedienenden exakt rundlaufend und fest spannt. Höhenschlagzentrierung und Taumelschlagzentrierung sind dabei streng voneinander getrennt.

Die Erfindung erreicht dies mit den in den Ansprüchen 1 genannten Mitteln.
Vorteilhafte Weiterbildungen sind in den Unteransprüchen angegeben.

Die Erfindung wird im folgenden anhand der Figuren 1 bis 3 näher beschrieben.

Es zeigen:

Figur 1 Spannvorrichtung mit angesetztem Bildzylinder

Figur 2 Spannvorrichtung mit eingespanntem Bildzylinder

Figur 3 Variante der erfindungsgemäßen Spannvorrichtung.

Eine Welle 1, die zum Gerät gehört, ist mit Lagern 2 und weiteren hier nicht gezeigten Lagern im Gehäuse 3 des Gerätes gelagert. An ihrem Ende ist die Welle 1 als Flansch 4 ausgebildet. Am äußersten Ende des Wellenstumpfes ist ein genau zentrisch laufender Konus 5 angearbeitet. Die Welle 1 ist hohl gebohrt, und die Bohrung 6 kann über ein hier nicht gezeichnetes elektrisch betätigtes Ventil mit einer Vakuumpumpe verbunden werden. An den Flansch 4 sind drei am Umfang gleichmäßig verteilte Lagerblöcke 7 angearbeitet, in denen Spannhebel 8 mittels Exzenterwellen 9 gelagert sind.

Auf die Exzenterwellen sind außerdem Hebel 10 aufgesetzt, die mittels Koppeln 11 gelenkig mit Schiebern 12 verbunden sind. Die Spannhebel 8 weisen Kulissenführungen 13 auf, in die in den Schiebern 12 eingelassene Stifte 14 eingreifen. Am Ende weisen die Spannhebel 8 hakenförmige Spannklauen 15 auf.

Die Schieber 12 sind mittels Schlitzen 16 auf Stiften 16a geführt, die in den Flansch 4 eingelassen sind. Am rechten Ende sind die Schieber 12 mittels Kolbenstangen 17 mit den Kolben 18 von drei an der Welle 1 angebrachten Pneumatik-Zylindern 19 verbunden. Die rechts von dem Kolben 18 befindlichen Zylinderräume stehen durch Bohrungen 20 mit der Bohrung 6 in der Welle 1 in Verbindung. Druckfedern 21 drücken die Kolben 18 in ihre linke Endstellung, wenn kein Unterdruck wirksam ist.

In den Flansch 4 sind drei vorzugsweise gehärtete Anlageflächen 22 eingelassen, deren Stirnflächen zu der Lagerung der Welle 1 genau zentrisch laufen, was z. B. durch Endbearbeitung (Schleifen) nach der Montage bewirkt werden kann.

Außen auf den Flansch 4 ist ein axial verschiebbarer Fühlring 23 aufgesetzt, der durch Druckfedern 24 in seiner linken Endstellung gehalten wird. Er arbeitet, wie weiter unten gezeigt, mit drei gleichmäßig am Umfang verteilten elektrischen berührungslos arbeitenden Näherungsschaltern 25 zusammen, die im Gehäuse 3 angeordnet sind. Der einzuspannende Bildzylinder 26 weist an seinem rechten Ende einen Flansch 27 auf, der mit einem Spannring 28 verschraubt ist. Zwischen dem Flansch 27 und dem Spannring 28 ist eine relativ steife Membran 29 eingespannt. Die Membran 29 hat eine leicht düsenförmig ausgebildete Mittelbohrung 31. Die Mittelbohrung 31 läuft genau zentrisch zum Zylinderumfang.

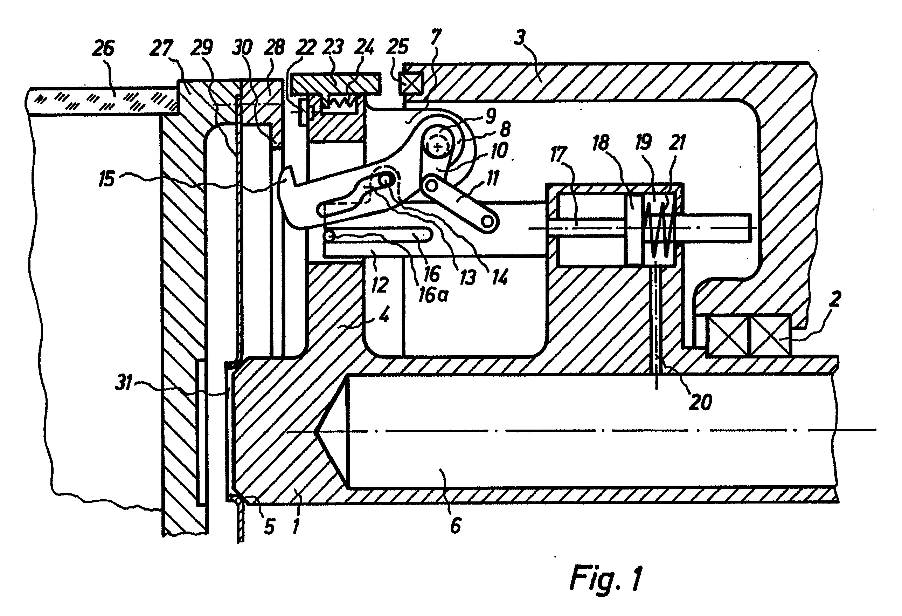

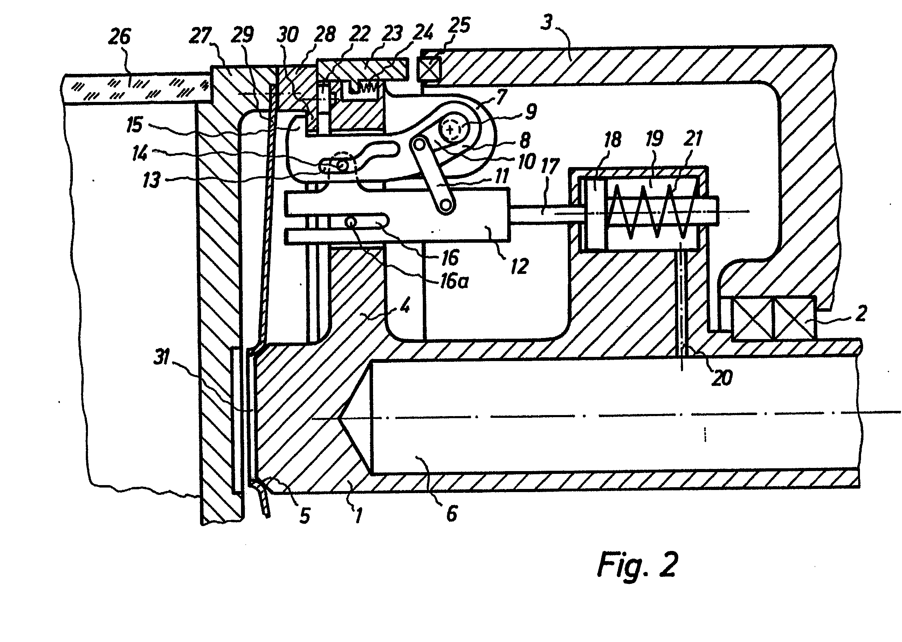

Zum Einspannen wird der Bildzylinder zunächst mit der Mittelbohrung 31 der Membran 29 leicht gegen den Konus 5 angelegt, wie in Figur 1 dargestellt. Damit ist der Bildzylinder 26 bereits bezüglich Höhenschlags zentriert. Wird er jetzt weiter nach rechts gedrückt, so biegt sich die Membran 29, wie in Figur 2 gezeigt, leicht durch. Der Spannring 28 kommt zur Anlage gegen den Fühlring 23 und schiebt diesen gegen die Federn 24 nach rechts, bis der Spannring 28 an den drei Anlageflächen 22 anliegt. Damit ist der Bildzylinder 26 auch bezüglich Taumelschlags zentriert. In dieser Stellung werden die drei Näherungsschalter 25 vom Fühlring 23 aktiviert. Nur wenn alle drei Schalter eingeschaltet sind, d. h., nur wenn der Spannring 28 tatsächlich an allen drei Anlageflächen 22 anliegt, wird über das nicht gezeigte Ventil die bisher mit der Vakuumpumpe in Verbindung stehende Bohrung 6 und mit ihr über die Bohrungen 20 die Zylinder 19 belüftet. Die Druckfedern 21 auf der rechten Seite der Kolben 18 drücken diese und mit ihnen die Schieber 12 nach links. Dabei bewegen sich die in den Schiebern eingelassenen Stifte 14 in den Kulissenführungen 13 der Spannhebel 8 und schwenken diese so, daß ihre Spannklauen 15 hinter einen Ansatz 30 am Spannring 28 greifen. Die Koppeln 11, die Hebel 10, die Exzenterwellen 9 sowie die Kulissenführungen 13 sind in ihrem Zusammenspiel so aufeinander abgestimmt, daß die Spannklauen 15 zunächst in die in Figur 2 gezeigte Lage gebracht werden. Dann erst werden die Spannhebel 18 durch die Betätigung der Exzenterwellen 9 nach rechts gezogen und ziehen mit ihren Spannklauen 15 den Spannring 28 fest gegen die Anlageflächen 22. Letzteres geschieht wegen der großen Übersetzung der Exzenterwellen 9 mit großen Kräften, die den Bildzylinder sicher und zentrisch laufend halten.

Zum Ausspannen der Zylinder laufen die Vorgänge in umgekehrter Reihenfolge ab. Das Vakuumventil wird dazu von Hand geschaltet, wobei eine Verriegelung zweckmäßig ist, die das Einschalten des Vakuums nur bei Maschinenstillstand zuläßt.

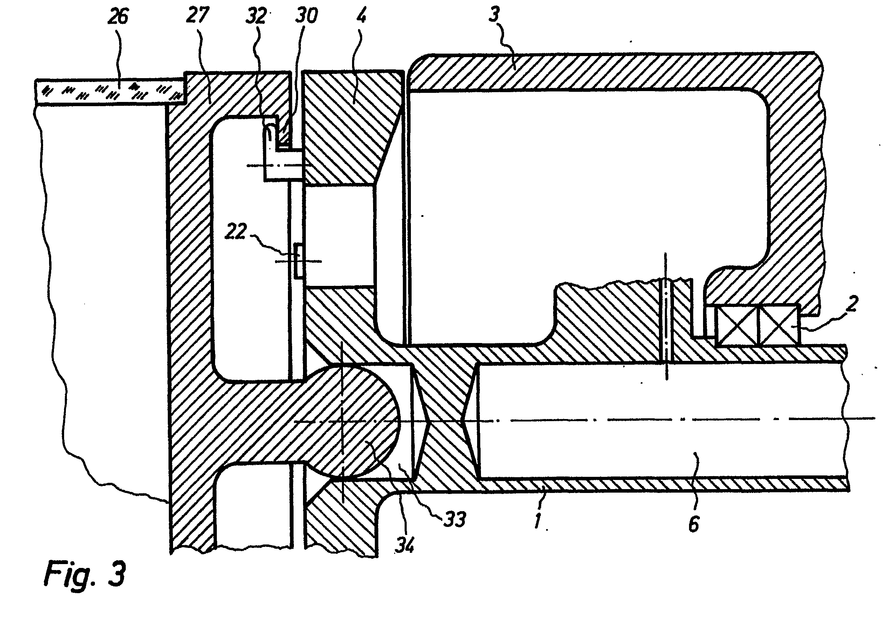

Eine Variante der erfindungsgemäßen Spannvorrichtung ist in Fig. 3 dargestellt. Die radiale Zentrierung erfolgt hier durch einen Zapfen mit kugelförmigem, vorzugsweise gehärtetem Kopf 34, der in der Mitte des Flansches 27 angebracht ist und in eine Zentrierbohrung 33 der Welle 1, deren Oberfläche ebenfalls vorzugsweise gehärtet ist, eingreift. Weiterhin weist diese Variante einen Haltehaken 32 auf, der am Flansch 4 befestigt ist. Der Mechanismus zur Betätigung der Spannhebel 8 entspricht der oben beschriebenen Version und ist deshalb in Fig. 3 nicht dargestellt, um die Figur übersichtlich zu halten. Gegen die Figuren 1 und 2 ist der Flansch in Fig. 3 um 30° verdreht dargestellt; d.h. der Haltehaken 32 steht genau zwischen zwei Spannhebeln 8.

Durch Steuerungselemente, die allseits bekannt und deswegen hier nicht näher beschrieben sind, ist im Betrieb dafür gesorgt, daß bei Stillstand der Maschine der Haltehaken 32 stets nach oben zeigt. Dementsprechend liegt dann stets eine der Anlageflächen 22 senkrecht darunter.

Zum Einspannen des Zylinders hängt der Bediener den Zylinder 26 einfach mit dem Ansatz 30 auf den Haltehaken 32. Die Zentrierkugel 34 greift dabei in die Zentrierbohrung 33 ein, und der Flansch 27 legt sich durch das Gewicht des Bildzylinders gegen die unten stehende Anlagefläche 22. Der Bediener hat somit beide Hände frei. Der Haltehaken 32 ist so bemessen, daß der Flansch 27 dicht vor den beiden nach oben stehenden Anlageflächen 22 steht, so dicht, daß die Spannhebel 8 bei Betätigung mit Sicherheit hinter den Ansatz 30 greifen. Wie bei der ersten Ausführung beschrieben, wird dadurch der hier mittels Zentrierkugel 34 und Zentrierbohrung 33 bereits radial zentrierte Zylinder axial fest gegen alle drei Anlageflächen 22 gezogen und ist somit auch bezüglich Taumelschlag zentriert.

Der gesamte Spannvorgang wird hier ohne manuelles Zutun des Bedieners allein von der Maschinensteuerung ausgeführt. Aus Sicherheitsgründen empfiehlt es sich dennoch, die effektive Endlage der Spannhebel 8 oder der Koppeln 11 durch Lichtschranken oder ähnliche Kontrollsensoren abzufragen und den Maschinenstart zu blockieren, wenn nicht alle drei Spannhaken exakt gegriffen haben.

Der im ersten Ausführungsbeispiel dargestellte Fühlring 23 und die Näherungsschalter 25 entfallen natürlich bei dieser Variante.

Die Anwendung der Erfindung beschränkt sich nicht auf das Einspannen von Bildzylindern allein. Sie kann vielmehr überall dort Verwendung finden, wo Bauteile mit normierbaren Spannflanschen häufig im Wechsel schnell, zentrisch und unabhängig von der Geschicklichkeit des Bedienenden fliegend gespannt werden sollen.

## Patentansprüche

1. Einrichtung zum zentrischen fliegenden Einspannen von Bildzylindern in Trommelscannern, dadurch gekennzeichnet, daß

a) die Bildzylinder (26) am Spannende eine Membran (29) mit zentrisch verlaufender Mittelbohrung (31) sowie einen Spannring (28) mit Ansatz (30) aufweisen,

b) die Gerätwelle (1) des Scanners an ihrem Ende einen Konus (5) aufweist,

c) die Gerätwelle (1) des Scanners am Ende einen Flansch (4) trägt, in dem mittels Exzentrenwellen (9) mehrere am Umfang verteilte Spannhebel (8) gelagert sind,

d) am Flansch (4) vorzugsweise gehärtete Anlageflächen (22) für den Spannring (28) des Bildzylinders (26) angeordnet sind,

e) die Spannhebel (8) Kulissenführungen (13) aufweisen,

f) die Spannhebel (8) an dem dem Bildzylinder zugewandten Ende als Haken (15) ausgebildet sind,

g) jedem Spannhebel (8) ein Schieber (12) zugeordnet ist, der in einer Geradführung (16; 16a) im wesentlichen parallel zur Geräteachse gegen die Kraft einer Feder (21) bewegbar ist,

h) die Schieber (12) Stifte (14) aufweisen, die in die Kulissenführung (13) der Spannhebel (8) eingreifen,

i) an den Schiebern (12) Koppeln (11) angelenkt sind, über die auf den Exzenterwellen (9) befestigte Hebel (10) bewegbar sind, und

j) die Schieber (12) durch Kolben (18) mindestens eines pneumatischen Arbeitszylinders (19) bewegbar sind, indem der Arbeitszylinder (19) über die hohle Gerätewelle (1) ds Scanners evakuierbar ist.

2. Einrichtung nach Anspruch 1, dadurch gekennzeichnet, daß am Gehäuse (3) des Scanners mindestens ein Näherungsschalter (25) angeordnet ist, der über einen Fühlring (23) bei Anlage des Spannrings (28) gegn die Anlageflächen (22) ein elektrische gesteuertes pneumatisches Ventil betätigt.

3. Einrichtung zum zentrischen fliegenden Einspannen von Bildzylindern in Trommelscanners, dadurch gekennzeichnet, daß

a) die Bildzylinder (26) am Einspannende einen Flansch (27) mit einem zentrisch am Flansch (27) angeordneten Zapfen mit kugelförmigen vorzugsweise gehärtetem Kopf (34) aufweisen,

b) die Gerätewelle (1) des Scanners an ihrem Ende eine Bohrung (33) mit vorzugsweise gehärteter Oberfläche aufweist, deren Innendurchmesser dem Durchmesser des kugelförmigen Kopfes entspricht,

c) die Gerätewelle (1) des Scanners am Ende einen Flansch (4) trägt, in dem mittel Exzenterwellen (9) drei am Umfang gleichmäßig verteilte Spannhebel (8) gelagert sind,

d) am Flansch (4) drei vorzugsweise gehärtete Anlageflächen (22) für den Spannring (28) des Bildzylinders (26) angeordnet sind,

e) die Spannhebel (8) Kulissenführungen (13) aufweisen,

f) die Spannhebel (8) an dem dem Bildzylinder (26) zugewandten Ende als Haken (15) ausgebildet sind,

g) jedem Spannhebel (8) ein Schieber (12) zugeordnet ist, der in einer Geradführung (16; 16a) im wesentlichen parallel zur Geräteachse gegen die Kraft einer Feder (21) bewegbar ist,

h) die Schieber (12) Stifte (14) aufweisen, die in die Kulissenführungen (13) der Spannhebel (8) eingreifen,

i) an den Schiebern (12) Koppeln (11) angelenkt sind, über die auf den Exzenterwellen (9) befestigte Hebel (10) bewegbar sind,

j) die Schieber (12) durch Kolben (18) mindestens eines pneumatischen Arbeitszylinders (19) bewegbar sind, indem der Arbeitszylinder (19) über die hohle Gerätewelle (1) des Scanners evakuierbar ist, und

k) am Flansch (4) mittig zwischen zwei der drei Spannhebel (8) ein Haltehaken (32) so angebracht ist, daß der Flansch (27) des Bildzylinders (26) mit einem Ansatz (30) in diesen einhängbar ist.

4. Einrichtung nach Anspruch 3, dadurch gekennzeichnet, daß geeignete Sensoren vorgesehen sind, die den Antrieb der Gerätewelle blockieren, wenn sich nicht alle Spannhebel (8) in der Endstellung für den Einspannzustand befinden.

5. Einrichtung nach Anspruch 3, dadurch gekennzeichnet, daß mittels geeigneter Sensoren an der Gerätewelle (1), deren Antrieb so gesteuert wird, daß sich der Haltehaken (32) bei Stillstand der Geräte-Welle (1) in senkrechter Stellung befindet.

**Revendications**

1. Dispositif pour le serrage centré à la volée de cylindres d'images sur des scanners à tambour, dispositif caractérisé en ce que

a) les cylindres d'images (26) comportent à l'extrémité de serrage une membrane (29) avec un perçage central centré (31) ainsi qu'un anneau de serrage (28) avec un épaulement (30),

b) l'arbre (1) du scanner comporte à son extrémité un cône (5),

c) l'arbre (1) du scanner porte à son extrémité, une bride (4) dans laquelle, au moyen d'arbres excentrés (9), sont montés plusieurs leviers de serrage (8) répartis à la périphérie,

d) des surfaces d'appui (22), de préférence trempées, pour l'anneau de serrage (28) du cylindre d'images (26) sont disposées sur la bride (4),

e) les leviers de serrage (8) comportent des guidages de coulisses (13),

f) les leviers de serrage (8) revêtent à leurs extrémités opposées aux cylindres d'images, la forme de crochets (15),

g) à chaque levier de serrage (8) est associé un coulisseau (12) qui est susceptible d'être déplacé sur un guidage rectiligne (16; 16a), en pratique paralèment à l'axe de l'appareil, contre l'action d'un ressort, (21),

h) les coulisseaux (12) comportent des broches (14) qui viennent en prise dans les guidages de coulisses (13) des leviers de serrage (8),

i) sur les coulisseaux (12) sont articulées des bielles (11) par l'intermédiaire desquelles des leviers (10) fixés sur les arbres excentrés (9) sont susceptibles d'être déplacés,

j) les coulisseaux (12) sont susceptibles d'être déplacés par un ou des pistons (18) d'au moins un vérin pneumatique (19), du fait que le ou les vérins (19) sont mis en dépression par l'intermédiaire de l'arbre creux (1) du scanner.

2. Dispositif selon la revendication 1, caractérisé en ce que, sur le carter (3) du scanner est disposé au moins un commutateur de proximité (25), qui, actionné par l'intermédiaire d'un anneau palpeur (23) actionne une soupape pneumatique commandée électriquement lorsque l'anneau de serrage (38) vient s'appliquer contre les surfaces d'appui (22).

3. Dispositif pour serrer et centrer à la volée des cylindres d'images sur des scanners à tambour, dispositif caractérisé en ce que;

a) les cylindres d'images (26) comportent à leurs extrémités de serrage, une bride (27) au centre de laquelle est disposé un téton comportant une tête en forme de sphère (34), de préférence trempée,

b) l'arbre (1) du scanner comporte à son extrémité un alésage (33) dont la surface de préférence est trempée, et dont le diamètre interne correspond au diamètre de la tête en forme de sphère,

c) l'arbre (1) du scanner porte à son extrémité une bride (4) sur laquelle sont montés, au moyen d'arbres excentrés (9) trois leviers de serrage (8) uniformément répartis sur la périphérie,

d) sur la bride (4) sont disposées trois surfaces d'appui (22), de préférence trempées, pour l'anneau de serrage (28) du cylindre d'images (26),

e) les leviers de serrage (8) comportent des guidages de coulisse (13),

f) les leviers de serrage (8) revêtent à leurs extrémités tournées vers le cylindre d'images (26) la forme de crochets (15),

g) à chaque levier de serrage (8) est associé un coulisseau (12) qui est susceptible de se déplacer sur un guide rectiligne (16; 16a) en pratique parallèlement à l'axe de l'appareil contre l'action d'un ressort (21),

h) les coulisseaux (12) comportent des broches (14) qui viennent en prise dans les guidages de coulisses (13) des leviers de serrage (8),

i) sur les coulisseaux (12) sont articulées des bielles (11) par l'intermédiaire desquelles des leviers (10) fixés sur les arbres excentrés (9) sont susceptibles d'être déplacés,

j) les coulisseaux (12) sont susceptibles d'être déplacés par un ou des pistons (18) d'au moins un vérin pneumatique (19), du fait que le ou les vérins (19) peuvent être mis en dépression par l'intermédiaire de l'arbre creux (1) du scanner,

k) un crochet de maintien (32) est rapporté sur la bride (4) au milieu, entre deux des trois leviers de serrage (8), de sorte que la bride (27) du cylindre d'images (26) peut être suspendue à ce crochet par un épaulement (30).

4. Dispositif selon la revendication 3, caractérisé en ce qu'il est prévu des détecteur appropriés qui bloquent l'entraînement de l'arbre de l'appareil, lorsque tous les leviers de serrage (8) ne se trouvent pas dans la position terminale correspondant à l'état de serrage.

5. Dispositif selon la revendication 3, caractérisé en ce que, grâce à des détecteurs appropriés sur l'arbre (1) l'appareil, l'entraînement de cet arbre est commandé de façon que le crochet de maintien (32) se trouve en position verticale lorsque l'arbre (1) de l'appareil est à l'arrêt.

## Claims

1. Mechanism for the centric floating clamping of image cylinders in drum scanners, characterised in that:

a) the image cylinders (26) have at the clamping end a diaphragm (29) with a centrally extending centre bore (31) as well as a clamping ring (28) with an extension (30),

b) the apparatus shaft (1) of the scanner has a taper (5) at its end,

c) the apparatus shaft (1) of the scanner carries a flange (4) at the end in which several peripherally distributed clamping levers (8) are mounted by means of eccentric shafts (9),

d) contact surfaces (22) preferably hardened for the clamping ring (28) of the image cylinder (26) are arranged on the flange (4),

e) the clamping levers (8) have slide guideways (13),

f) the clamping levers (8) are formed as hooks (15) at the end facing towards the image cylinder,

g) associated with each clamping lever (8) is a slider (12) which is displaceable substantially parallel to the apparatus axis in a straight guideway (16; 16a) against the force of a spring (21),

h) the sliders (12) comprise pins (14) which engage in the slide guideways (13) of the clamping levers (8),

i) linked to the sliders (12) are couplings (11), via which levers (10) secured on the eccentric shafts (9) can be displaced and

j) the sliders (12) are displaceable by means of pistons (18) of at least one pneumatic working cylinder (19), since the working cylinder is evycuable via the hollow apparatus shaft (1) of the scanner.

2. Mechanism according to claim 1, characterised in that arranged on the housing (3) of the scanner is at least one proximity switch (25) which operates an electrically controlled pneumatic valve via a sensor ring (23) when the clamping ring (28) is in contact with the contact surfaces (22).

3. Mechanism for the centric floating clamping of image cylinders in drum scanners, characterised in that:

a) the image cylinders (26) comprise at the clamping end a flange (27) with a stud arranged centrally on the flange with a ball-shaped and preferably hardened head (34).

b) the apparatus spindle (1) of the scanner carries at its end a bore (33) having a preferably hardened surface the internal diameter of which corresponds to the diameter of the ball-shaped head,

c) the apparatus shaft (1) of the scanner carries at the end a flange (4) in which three peripherally uniformly distributed clamping levers (8) are mounted by means of eccentric shafts (9),

d) three preferably hardened contact surfaces (22) for the clamping ring (28) of the image cylinder (26) are arranged on the flange (4),

e) the clamping levers (8) have slide guideways (13),

f) the clamping levers (8) are formed as hooks (15) at the end facing towards the image cylinder (26),

g) associated with each clamping lever (8) is a slider (12) which is displaceable substantially parallel to the apparatus spindle in a straight guideway (16; 16a) against the force of a spring (21),

h) the sliders (12) comprise pins (14) which engage in the slide guideways (13) of the clamping levers (8),

i) linked to the sliders (12) are couplings (11)f via which levers (10) fastened on the eccentric shafts (9) can be displaced,

j) the sliders (12) are dispalceable by means of pistons (18) of at least one pneumatiac working cylinder (19) by virtue of the working cylinder (19) being evacuable via the hollow apparatus shaft (1) of the scanner and

k) a holding hook (32) is so arranged on the flange (4), centrally between tow of the three clamping levers (8), that the flange (27) of the image cylinder (26) can be hooked therein by means of an extension (30):

4. Mechanism according to claim 3, characterised in that appropriate sensors are provided, which block the drive to the apparatus shaft if the clamping levers (8) are not all situated in the end position for the clamped state.

5. Mechanism according to claim 3, characterised in that by means of appropriate sensors on the apparatus shaft (1), its drive is so controlled that the holding hook (32) in in a vertical position when the apparatus shaft (1) is stopped.

Fig. 1

Fig. 2

Fig. 3

EP 0 279 874 B1